# EUROPEAN PATENT APPLICATION

(11) **EP 4 563 513 A1**
(43) Date of publication of application: **04.06.2025**
(21) Application number: 23213340.5
(22) Date of filing: 30.11.2023
(51) Int. Cl.: B66C 1/34, B66C 23/18, F03D 80/00, B66C 23/20, F03D 80/80

(54) **BALLAST WEIGHT FOR A CRANE, CRANE SYSTEM AND METHOD FOR OPERATING A CRANE SYSTEM, NACELLE FOR A WIND TURBINE AND METHOD FOR OPERATING A WIND TURBINE**

(71) Applicant: Siemens Gamesa Renewable Energy A/S, 7330 Brande (DK)
(72) Inventor: Clemmensen, Olav, 6900 Dejbjerg, Skjern (DK); Henningsen, Nikolaj Monrad, 8464 Galten (DK); Otte, Jens, 8870 Langå (DK)
(74) Representative: SGRE-Association

(57) **Abstract**

Ballast weight (12) for coupling to an attachment means (11), in particular to a hook, attached to the lower end of a rope (10) of a crane (9),
wherein the ballast weight (12) is formed by or comprises a main body (17),
wherein the main body (17) encompasses a receiving space (18),
wherein the receiving space (18) is designed to receive at least a section of the attachment means (11) in an operational state (78) of the ballast weight (12),
wherein the receiving space (18) is delimited by an inner surface (21) of the main body (17) and extends along a central axis (19) of the ballast weight (12),
wherein the size (74, 75) of the receiving space (18) in at least one direction orthogonal to the central axis (19) is larger at a first position (76) along the central axis (19) than at a second position (77) along the central axis (19) that is arranged above the first position (76), such that the inner surface (21) forms a contact surface (41) arranged at an angle (80) to the central axis (19), that is designed to be supported by a support surface (42) of the attachment means (11),
wherein the main body (17) comprises a slit (20) to allow for a movement of the rope (10) into the receiving space (18). Also disclosed is a crane system comprising such a ballast weight and a rack for storing a ballast weight and a method of operating a wind turbine wherein the turbine is constructed using such a crane.

## Description

### FIELD OF THE INVENTION

The present invention relates to a ballast weight for coupling to an attachment means, in particular to a hook, attached to the lower end of a rope of a crane, in particular of a crane of a wind turbine. Additionally, the invention relates to a crane system, to a method for operating a crane system, to a nacelle for a wind turbine and a to method for operating a wind turbine.

### BACKGROUND

When lifting an object with a crane, the object is usually attached to an attachment means, in particular to a hook, of the crane. The attachment means is in turn attached to a lower end of the rope of the crane. In windy conditions, the lower end of the rope and therefore the attachment means and the object are often deflected from the preferred vertical position due to wind. Such a deflection is particularly relevant when the object, which is to be lifted, is very light. Deflection of the lower rope end caused by the wind does also increase with increasing length of the rope and increasing wind strength.

To reduce the deflection, a ballast weight can be integrated into or be removably to the attachment means. Hence an additional weight is added and the tension of the rope is increased, such that the rope is less prone to wind and the deflection can be reduced. Since the ballast weight does however load the crane, it should be removeable to lift heavy objects. It can, e.g., be necessary to repeatedly install and uninstall a ballast weight multiple times while using the crane to lift parts of different weights while servicing and/or constructing a wind turbine.

The documents DE 10 2019 219 001 A1 and US 2011/285157 A1 describe ballast weights that are attached to crane hooks by means of bolts or complex fixing mechanisms. Since mounting and unmounting these ballast weights is complex, time-consuming and requires specific tools, changing the ballast weight to adapt the weight of the hook to the weight of the object to be lifted involves a lot of effort.

It is an objective problem to provide an optimized solution and to avoid disadvantageous functionalities, in particular to optimize with respect to the effort required for operating the crane, more in particular when constructing or servicing a wind turbine.

### SUMMARY

According to an aspect, the problem is solved by providing a ballast weight for coupling to an attachment means, in particular to a hook, attached to the lower end of a rope of a crane, in particular of a crane of a wind turbine.

The ballast weight is formed by or comprises a main body, wherein the main body encompasses a receiving space. The receiving space is designed to receive at least a section of the attachment means in an operational state of the ballast weight, in which the ballast weight is coupled to the attachment means and used as a ballast to reduce a deflection of the rope due to wind conditions. The receiving space is delimited by an inner surface of the main body and extends along a central axis of the ballast weight. The size of the receiving space in at least one direction orthogonal to the central axis is larger at a first position along the central axis than at a second position along the central axis that is arranged above the first position when the ballast weight is arranged in the operational state, such that the inner surface forms a contact surface arranged at an angle to the central axis, that is designed to be supported by a support surface of the attachment means in the operational state.

The main body comprises a slit that connects the inner surface of the main body with an outer surface of the main body, to allow for a movement of the rope into the receiving space during the attachment of the ballast weight to the attachment means.

In particular the problem is solved by providing a ballast weight and/or a crane system and/or a method for operating a crane system and/or a nacelle for a wind turbine and/or a method for operating a wind turbine according to the independent claims.

The attachment means can be understood as a component of the crane which is fixed to the lower end of the cranes rope and to which an object can be attached in order to lift the object with the crane. The attachment means may already comprise an initial weight, e.g., be formed by a hook with an attached initial weight, and/or may or may not follow the shape of a hook.

The main body of the ballast weight can be formed by just one component. It can however also comprise a plurality of components, which can be fixed to one another to form an integral body. The main body can be fabricated from any material which is commonly used for fabricating weights. It can even comprise multiple bodies made from different materials. Preferably, the main body is fabricated from a material with a high density, such as metal, in particular steel, or concrete.

The central axis preferably runs through the center, in particular the center of gravity, of the main body. The main body may have a symmetric shape and the central axis may be its symmetry axis. Apart from the slit, the entire ballast weight may be rotationally symmetrical, wherein the central axis is the symmetry axis.

The ballast comprises a receiving space which is configured to hold the attachment means. The receiving space can be understood as a counterpart to the attachment means. Hence, at least a part of the inner surface of the main body forming the receiving space preferably follows an outer surface of the attachment means.

The receiving space can extend over the full height of the main body. The receiving space can therefore be open towards the bottom of the main body, to allow for the insertion of the attachment means into the receiving space from below, when attaching the ballast weight to the attachment means, and/or be open towards the top of the main body to allow an upper section of the attachment means and/or the rope to extend vertically upward from the receiving space.

In the operational state, the receiving space can, in principle, be completely filled by the attachment means or the attachment means and the rope. It is however typically advantageous, when certain sections in the receiving space remain free in the operational state, e.g., to create and intermediate space between, on the one hand, certain sections of the outer wall of the attachment means and/or the rope and on, the other hand, the inner surface of the main body, e.g., to allow for a centering of the attachment means within the ballast weight, as discussed below.

The receiving space can be of any shape which allows for an easy insertion of the attachment means along the central axis. The receiving space comprises a contact surface, which extends orthogonal or at an angle, e.g., between 15° and 75°, to the central axis. Due to the angle between the contact surface and the central axis, the weight of the ballast weight or in general forces along the central axis can be transferred via the contact surface to the support surface of the attachment means. Therefore, the contact surface of the attachment means can support at least part of the weight, in particular the full weight, of the ballast weight in the operational state. In can be advantageous, when the angle between the contact surface and the central axis is less then 90°, to allow for a transfer of forces at an angle to the central axis from the contact surface to the support surface, e.g., to provide a horizontal support for the ballast weight in the operational state and/or to center the attachment means within the ballast weight during the attachment, e.g., to ensure that the center of gravity is approximately aligned with the rope. Preferably, at least a section of the receiving space along the central axis is cylindrical. Additionally or alternatively, the contact surface can follow the shape of a cone or a ring.

In other words, the contact surface forms a stop, a support, or an abutment for the attachment means since the surface is non-parallel to a vertical direction, to the direction of the rope, and or to the direction of the central axis. Additionally or alternatively, in particular, when seeing in a vertical plane-perspective, the contact surface and the vertical axis include an angle, in particular a cute angle which is larger than 0°, in particular larger than 10°, further in particular larger than 30°, further preferably larger than 45°, further preferably larger than 60°.

The contact surface can work as a stop for the attachment means when inserting the attachment means along the central axis into the receiving space. Once the ballast weight is in the operational state, the support surface of the attachment means abuts the contact surface of the ballast weight, wherein the connection of those two surfaces enables a transfer of force from the attachment means, hence the crane, to the ballast weight. In other words, in the operational state, a ballast weight rests upon the attachment means in the direction of the central axis.

To allow an easy coupling of the attachment means and the ballast weight, the central axis of the ballast weight is preferred to be vertical. Hence, the attachment means can be slid into the receiving space in the vertical direction along the central axis, which is beneficial, because the crane is configured to lift the attachment means in the vertical direction.

Such coupling does however require, that the attachment means can be arranged below the ballast weight in the vertical direction. Therefore, the ballast weight comprises the slit, which allows the rope of the crane to move from a position outside or for the ballast weight through the slit into the receiving space. Once the rope is in the receiving space, the rope extends through the ballast weight, preferably in the direction of the central axis, more preferably in the vertical direction.

In the operational state, in which the ballast weight is coupled to the attachment means and the attachment means is used to lift an object by means of the crane, the central axis of the ballast weight can preferably be exactly vertical or extent at an angle of less than 30° or less than 20° or less than 10 ° to the vertical direction.

Due to the geometry of the main body, the ballast weight can easily be coupled to the attachment means. Under ideal circumstances, in which the rope of the crane extends exactly vertically along the central axis of the ballast weight, the ballast weight can be coupled to the attachment means as follows:

The attachment means hanging on the rope of the crane can be positioned horizontally besides the ballast weight, such that it is arranged vertically below the ballast weight. It can then be moved horizontally, such that the rope moves through the slit of the ballast weight and the attachment means is aligned with the receiving space of the ballast weight. Finally, the attachment means can be lifted in the vertical direction, such that the attachment means slides into the receiving space and the ballast weight rests upon the attachment means. It should be noted, that the central axis of the ballast and/or that extension of the rope can deviate to a certain degree from the vertical direction, while still allowing the mounting procedure discussed above.

The ballast weight can be coupled to the attachment means without the need of any additional fixing means, such as bolts or screws or the like, which need to be mounted using tools and/or by a manual handling. Therefore, no special tools are needed to couple the ballast weight to the attachment means. In general, the ballast weight according to the invention can allow for an easy coupling to the attachment means, which does not require fixing means or tools and may be carried out by only one person, especially by the person operating the crane. Since the coupling can be carried out more easily and quickly, it is much easier to adapt the total weight, which is to be lifted by the crane, to the current environmental conditions, in particular the wind conditions, and/or to the weight of the object to be lifted and therefore to use the ballast weight as additional weight only when needed.

A crane is usually used to lift objects of different sizes and/or different weights in changing wind conditions. By providing a ballast weight according to the invention, the total weight, which is to be lifted by the crane, can more easily be adapted to the current situation by simply coupling or uncoupling the ballast weight to or from the attachment means of the crane. For example, when it is a very windy and the object to be lifted is the very light, the ballast weight can be coupled to the attachment means in order to increase the total weight and to reduce the deflection of the crane rope. However, when it is not windy and/or when the object to be lifted is very heavy, the ballast weight may preferably not be coupled to the attachment means or may be uncoupled from the attachment means, such that the total weight which is lifted is not increased by the ballast weight.

In a preferred embodiment, a height-to-width-ratio of the ballast weight, with the height being a maximum elongation of the ballast weight in the direction of the central axis and the width being a maximum elongation of the ballast weight orthogonal to the central axis, is within a range of 1/1 to 1/5. Since the maximum height of the ballast weight reduces the maximum lifting height to which an object attached to the attachment means or the attachment means itself can be lifted by the crane, especially when operating in an enclosed space, e.g., in the nacelle of a wind turbine, the maximum height of the ballast weight is in particular as small as possible. The ballast weight can additionally or alternatively have a maximum height of 0.3 m or of 1.5 m for the same reasons.

It is further preferred, that the ballast weight has a mass of at least 100 kg or at least 300 kg. Such mass is particularly suitable as additional ballast added to the attachment means to prevent the crane rope from being deflected, in particular when operating the crane of a wind turbine.

In a preferred embodiment, the slit extends in parallel to the central axis or at an angle of less than 5° or less than 10° or less than 20° degrees to the central axis. With the slit extending in parallel or at a slight angle to the central axis, the rope can more easily be moved through the slit into the receiving space, when the rope is hanging essentially vertically due to the weight of the attachment means. In particular, the ballast weight can be coupled to the attachment means without tilting the ballast weight or the attachment means.

Additionally or alternatively, the slit can be funnel-shaped, such that a width of the slit increases towards the outer surface of the main body. The funnel locally increases the size of the slit, such that the rope can more easily be inserted into the slit. This is especially beneficial in windy conditions in which the rope may not be exactly stationary and/or when there is no personal present close to the counterweight to manually guide the attachment means and/or to guide the rope into the slit. The funnel may be provided by means of chamfering the outer surface of the main body.

It is preferred, that the slit extends along a straight line in the direction orthogonal to the central axis. This allows the rope to be moved through the slit along one direction with minimal or no contact to the walls and/or edges of the slit.

The ballast weight can comprise a bumper, which is fixed to the main body and extends at least partially around the central axis along the circumference of the ballast weight. By providing the bumper, the safety in the operational state can be improved. Since the ballast weight is most likely to be used in windy conditions, the ballast weight can swing and may hence potentially collide with an object, e.g., with the tower of a wind turbine that comprises the crane. If this happens, the impact energy can be reduced by means of the bumper. Therefore, it is preferred, that the bumper is made from soft material, like rubber or a polymer.

Preferably, the bumper can be fixed to the main body in such a way, that an inner surface of the bumper abuts the outer surface of the main body. The bumper can provide an outer surface of the ballast weight in the direction orthogonal to the central axis. Preferably, the bumper extends around the entire circumference of the main body, apart from the slit of the main body. The slit of the main body is preferably not covered by the bumper and can coincide with a slit of the bumper. The slit of the bumper can be configured to extend the slit of the ballast weight and may be funnel-shaped. It is possible, that both slits are funnel shaped or that, e.g., only the slit of the bumper is funnel shaped.

The ballast weight can comprise one bumper or several bumpers. In case of the ballast weight comprising several bumpers, at least one bumper may be fixated such, that it extends around the circumference of the main body.

In a preferred embodiment, the main body comprises multiple holding projections for holding the bumper and the bumper comprises holding sections that form counterparts to the holding projections, wherein each holding projection projects from the outer surface of the main body and extends along a respective projection direction away from the central axis, wherein the size of each holding projection in at least one respective direction orthogonal to the respective projection direction is larger at an outer position along the projection direction than at an inner position along the projection direction, such that each holding projection provides a respective holding surface that faces towards the outer surface of the main body, wherein the holding sections of the bumper abut the holding surfaces of the holding projections forming a form-fit and restricting a movement of the bumper relative to the main body.

By means of the bumper engaging with the holding projections and forming a form fit, the bumper can be securely attached to the main body. This is highly relevant, since a collision between the bumper and an object of the surroundings may otherwise cause the bumper to completely or partially separate from the main body, especially when the bumper has a slit and can therefore be locally pulled away from the main body in the radial direction with respect to the central axis.

The holding projections can in particular engage with the bumpers holding sections to provide a form fit, such that the bumper is fixed to the main body and the movement of the bumper relative to the main body is restricted. The movement of the bumper relative to the main body is preferably restricted in the direction orthogonal to the central axis such, that the bumper cannot be separated from the main body in this direction. The movement of the bumper can also be restricted in the circumferential direction with respect to the central axis, thereby, e.g., blocking a rotation of the bumper with respect to the main body.

Since the size of the cross-section of each holding projection orthogonal to the respective projection direction can be larger at the outer position then at the inner position, the bumper "wraps around" each holding projection creating the form-fit. The holding sections of the bumper may not only abut the surfaces of the holding projections, but encompass the entire outer surface of each holding projection.

The main body may comprise at least two holding projections that are preferably arranged on opposing sides of the slit. Preferably, the main body may comprise a plurality of holding projections, wherein the holding projections are at least approximately uniformly distributed over the outer surface of the main body around the central axis.

Attaching the bumper to the main body by a form-fit connection is particularly beneficial, because there is no need for additional fixing means, like bolts, screws, glue or the like. Hence, production costs and production time can be reduced. The bumper may be fixed to the main body by simply sliding the bumper with the holding sections over the holding projections of the main body, in particular along the central axis.

The main body can comprise at least a first body part with a first bumper stop and a second body part with a second bumper stop, wherein the first body part and the second body part are connected, in particular along the central axis, to form the main body in a connected state, wherein the first bumper stop abuts an upper bumper surface of the bumper and the second bumper stop abuts a lower bumper surface of the bumper, wherein the first and second bumper stops are arranged on opposite sides of the bumper along the central axis, such that the bumper is fixed to the main body by means of a form-fit along the central axis.

By providing the first bumper stop and the second bumper, a movement of the bumper relative to the main body is further restricted by means of the form-fit along the central axis. In combination with the holding projections described above, the movement of the bumper relative to the main body can be restricted in every direction.

The first body part and the second body part can be connected, e.g., by means of bolts or screws. The first body part and the second body part can be directly or indirectly connected to each other. When the first body part and the second body part are directly connected to each other, the first body part and/or the second party part preferably comprise the holding projections. When the first body part and the second body part are indirectly connected, the main body can comprise one or more additional body parts, which are arranged between the two body parts along the central axis. One of such additional body parts can be a bumper holder which is configured to hold the bumper. Such bumper holder can comprise the holding projections.

Additionally or alternatively, the ballast weight can comprise at least one locking device configured to automatically lock the ballast weight to the attachment means during the coupling of the ballast weight to the attachment means, in particular when the attachment means is at least partly slid into the receiving space along the central axis.

Without the use of a locking device, the ballast weight could in rare cases still be unintentionally lifted off the attachment means, e.g., in the case of a collision of the ballast means with an object. This could lead to an uncoupling of the ballast weight from the attachment means. Hence, the at least one locking device can be provided to secure the ballast weight to the attachment means in the direction along the central axis. By ensuring an automatic locking, the chance of user error when installing the ballast weight can be minimized.

The at least one locking device is preferably configured such, that it automatically locks the ballast weight to the attachment means once the ballast weight and the attachment means are in the coupled state, in which the contact surface of the ballast weight abuts the support surface of the attachment means. The term "automatically" means, that the locking is achieved without additional actions. Hence, the at least one locking device provides a fail-safe mechanical safety device.

The locking device can comprise a shaft and a spring, wherein the shaft is positioned in a bore of the main body, wherein the shaft is movable along a shaft direction between a locked position in which at least a tip of the shaft protrudes into the receiving space, and an unlocked position in which the shaft does not protrude into the receiving space or protrudes into the receiving space for a lesser distance than in the locked position, wherein the spring is arranged between the main body and the shaft to apply a locking force to the shaft, pushing the shaft towards the locked state. The shaft direction can be orthogonal to the central axis. The bore can extend between the inner and outer surface of the main body. The spring can be arranged between a shoulder of the main body and a shoulder of the shaft.

In other words, the shaft can be described as being pre-loaded by means of the spring means. The shaft is advantageously pushed towards the receiving space by means of the spring. Additionally, a retaining means can be provided at the shaft, which is arranged outside of the main body and which abuts the outer surface of the main body when the shaft is in the locked position. The retaining means is configured to retain the shaft inside the bore, such that it is not pushed out of the bore by means of the spring. The retaining means can be a retaining ring, which is clipped onto the shaft. The spring can by formed by one or more springs elemnets, in particular by ring springs.

The shaft of the at least one locking device is automatically positioned in the locked position by means of the spring. By applying a counterforce to the shaft which is directed contrary to the force applied by the spring, the shaft can be pulled or pushed into the unlocked position while loading the spring means. Such a counterforce can, e.g., be applied via the tip of the shaft, when it is pushed outward by the outer surface of the attachment means, when the attachment means is inserted into the receiving space. The tip of the shaft can comprise a tip surface which is arranged at an angle of 15° to 60° to the central axis. By providing such an angled tip surface and/or by using an attachment means with an angled outer surface, the shaft can be pushed into the unlocked position when inserting the attachment means into the receiving space along the central axis. Once the outer surface of the attachment means does no longer contact the tip of the shaft, e.g., when the top of the shaft reaches a groove in the outer surface, the shaft snaps back to or into the locked position protruding into the receiving space and/or the attachment means.

Preferably, the at least one locking device is accessible from the outside of the ballast weight to move the shaft into the unlocked position. The locking device may comprise a handle arranged outside of the ballast weight, which may be used by a person to pull the shaft from the locked position against the locking force into the unlocked position.

The invention also concerns a crane system, in particular designed for integration into a wind turbine, comprising a crane with a rope and an attachment means attached to the lower end of the rope, and a ballast weight according to any of the previously described embodiments.

All features, advantages and aspects which have been explained with respect to the ballast weight according to the present invention can be applied to the crane system according to the present invention and vice versa.

A crane system with a ballast weight according the invention particularly advantageous, because the weight of the attachment means, and hence the total weight to be lifted by means of the crane, can easily be adjusted. Depending on the weight of the object to be lifted, the ballast weight can simply be coupled to or uncoupled from the attachment means. For example, in very windy conditions, in which the rope of the crane is likely to be deflected, the ballast weight can be coupled to the attachment means. Since such wind conditions commonly occur in areas in which wind turbines are preferably located, the crane system is preferred to be designed for integration into a wind turbine, for example into a nacelle of the wind turbine.

The relative movement between the ballast weight and the attachment means in the direction of the central axis of the ballast weight and/or in a plane orthogonal to the central axis can be limited by a form-fit between the inner surface of the main body and an outer surface of the attachment means in the operational state of the ballast weight, wherein the outer surface of the attachment means or a section of this outer surface forms the support surface.

In other words, the attachment means and the ballast weight can work as counterparts which form a form-fit in the direction along the central axis and/or in a direction orthogonal to the central axis, when in the operational state. As described above, the contact surface of the ballast weight, which is part of the inner surface of the main body, rests on the support surface of the attachment means, when the ballast weight is in the operational state, such that the ballast weight rests on top of the attachment means, in particular in the vertical direction. Additionally, it is preferred, when the receiving space of the ballast weight and the outer surface of the attachment means form a form-fit in a plane orthogonal to the central axis. By means of the form-fit in the direction of the central axis in combination with the form-fit in the plane orthogonal to the central axis, the ballast weight can be tightly secured to the attachment means.

Preferably, the receiving space is at least partially shaped like a cone. This way, the coupling of the ballast weight and the attachment means can be improved.

The ballast weight can, in particular, comprises at least one locking device and the attachment means can comprise a groove or an opening, wherein the at least one locking device is configured to automatically engage into the groove or the opening during the coupling of the ballast weight and the attachment means. The at least one locking device may be of any of the configurations described above with respect to the ballast weight. The groove or the opening of the attachment means preferably extends around entire circumference of the attachment means.

During the coupling of the attachment means and the ballast weight, the shaft of the at least one locking device can be pushed into the unlocked position by means of the attachment means being slid into the receiving space in the direction along the central axis. Once the attachment means is positioned such, that the groove or the opening is aligned with the shaft, the shaft can automatically snap back into the groove or the opening by means of the spring applying the locking force to the shaft. Hence, in the locked position, the shaft provides a stop in the direction along the central axis to restrict the movement of the ballast weight relative to the attachment means.

To uncouple the ballast weight and the attachment means, the shaft can be pulled back into the unlocked position and out of the receiving space, by applying a counterforce to the shaft which is bigger than the locking force. The counterforce may be applied to the shaft by means of a person pulling the shaft into the unlocked positioned from outside of the ballast weight. Alternatively, the counterforce may be applied to the shaft by means of an, in particular electromechanical, actuating means provided at the ballast weight.

The crane system can, in particular, comprise a rack for storing the ballast weight, wherein the ballast weight rests on the storage surface of the rack when the ballast weight is in a stored state, wherein the storage surface comprises a though hole and a slit connecting the through hole to an edge of the storage surface, wherein the slit allows the rope to be inserted into the through hole while the rope extends orthogonally to the storage surface, wherein the size of the through hole exceeds the size of the attachment means, such that the attachment means can be moved through the through hole in the vertical direction, wherein the rack comprises support means for supporting the storage surface above a floor, such that the distance between the storage surface and the floor is larger than the extension of the attachment means in the vertical direction, when the attachment means is hanging from the rope.

Using the rack, the ballast weight can be stored in the stored state at such distance above the floor, that the attachment means, when hanging on the rope, can be arranged below the ballast weight between the floor and the ballast weight. In other words, the rack allows the ballast weight to be stored in a position in which the attachment means can be arranged below the ballast weight in the vertical direction. This simplifies the coupling process of the attachment means and the ballast weight, since the attachment means can then be simply lifted vertically into the receiving space.

The rack can consist of any material, preferably metal, in particular steel, that provides sufficient structural stability to support the ballast weight. The storage surface can be formed by a, in particular plate-like, component of the rack. In the stored state, a lowermost surface of the ballast weight regarding the vertical direction can rest on top of the storage surface to hold or rather support the ballast weight in the vertical direction.

The support means may be any type of stand or mount. It is preferably configured to provide enough clearance between the floor and the storage surface, such that the attachment means, when hanging from the rope, can be moved between the floor and the storage surface, without contacting the floor or the storage surface. Preferably, the support means also provides enough clearance to move the attachment means without contacting the rack from a first position in which the attachment means is positioned next to the rack into a second position, in which the attachment means is positioned between the floor and the storage surface while being aligned with the through hole of the storage surface.

Being in the stored state, the ballast weight can be arranged on top of the rack in such way, that the receiving space of the ballast weight is aligned with the through hole of the storage surface and the slit of the ballast weight is aligned with the slit of the storage surface. In other words, the ballast weight can be arranged on top of the rack in such a way, that the receiving space of the ballast weight and the through hole of the rack as well as the slit of the ballast weight and the slit of the rack are aligned above each other in the vertical direction. Such an arrangement simplifies the coupling of the attachment means and the ballast weight, since the rope of the crane can be moved through both slits at a time to align the attachment means with the through hole of the rack and the receiving space of the ballast weight.

The rack may be configured to hold the stored ballast weight on top of the rack, in particular on top of the storage surface, even when the rack is tilted. This may be achieved by a plurality of lateral projections, which extend orthogonal to the storage surface at an outer edge of the storage surface.

The invention also concerns a method for operating a crane system according to the present invention, the method comprising the steps of:
- positioning the ballast weight at a first height above a floor,
- operating the crane to position the attachment means at a second height closer to the floor than the first height and to position the rope besides the ballast weight,
- operating the crane to move the rope through the slit of the ballast weight into the receiving space, such that the attachment means is aligned with the receiving space of the ballast weight, and
- operating the crane to lift the attachment means in the vertical direction, such that the attachment means slides into the receiving space and the contact surface of the ballast weight comes to rest upon the support surface of the attachment means.

The method may be carried out using a ballast weight of any of the configurations described above. The method can be applied to lift objects of different weights by using the same crane, the same rope and the same attachment means. By executing the method, the total weight which is to be lifted by means of the crane can easily be adjusted by installing or removing the ballast weight depending, e.g., on the weight of the respective object to be lifted and/or on the current environmental conditions.

According to the first step of the method, the ballast weight is positioned in the first height above the floor. In case of the crane system already comprising a rack, the ballast weight may be arranged in the stored state resting on the rack in the first height above the floor. The first height should be larger than the extension of the attachment means in the vertical direction, when the attachment means is hanging from the rope.

In the second step, the crane is operated to position the attachment means in the second height. When positioned in the second height, the attachment means can be arranged closer to the floor than the ballast weight and a vertically uppermost surface of the attachment means can be positioned closer to the floor than a vertically lowermost surface of the ballast weight. In other words, the attachment means is in particular positioned such, that it does not overlap with the ballast weight in the vertical direction. The rope is positioned besides the ballast weight, wherein preferably the attachment means and the ballast weight do not overlap in any direction orthogonal to the vertical direction.

In the third step, the crane is again operated to move the rope through the slit into the receiving space. At the end of this step the attachment means is aligned with the receiving space of the ballast weight and the rope can extend, at least substantially, along the central axis of the ballast weight. The rope may extend exactly along the central axis or at an angle of less than 30° or less than 20° or less than 10° to the central axis. The attachment means is positioned below the receiving space of the ballast weight in the vertical direction. In case of the ballast weight being stored on a rack, the rope can be moved through both the slit of the ballast weight and the slit of the storage surface of the rack at the same time, preferably without contacting the rack, such that the attachment means is aligned with the through hole of the storage surface of the rack.

In the fourth step, the crane is operated to lift to the attachment means in the vertical direction. This causes the attachment means to slide into the receiving space of the ballast weight. During this process, the contact surface of the ballast weight comes to rest upon the support surface of the attachment means. Once both surfaces abut each other, the ballast weight and the attachment are in the operational state. In case of the ballast weight being stored on a rack, the attachment means is previously moved at least partially through the through hole of the rack. In case of the ballast weight comprising a locking device according to one of the configurations described above, the locking device can automatically lock the attachment means to the ballast weight during the lifting of the attachment means in the vertical direction, such that the ballast weight is secured to the attachment means when in the operating state.

As described, no fixating means or tools must be provided to couple the ballast weight to the attachment means. Hence, the coupling can be carried out quickly and easily by simply sliding the attachment means into or out of the receiving space of the ballast weight along the central axis, preferably in the vertical direction. By providing a rack according to any of the configurations described above, the ballast weight does not to be lifted to the first height and the coupling process can be directly performed from the stored state.

The invention also concerns a Nacelle for a wind turbine, comprising a rack for storing a ballast weight for loading an attachment means, in particular a hook, attached to the lower end of a rope of a crane, in particular for storing a ballast weight according any of the configurations described above, wherein the rack comprises a storage surface designed to support the ballast weight when the ballast weight is in a stored state, wherein the rack comprises support means that supports the storage surface above a floor of the nacelle, thereby creating a free space below the storage surface, wherein the storage surface comprises a though hole and a slit connecting the through hole to an edge of the storage surface, the slit allowing the rope to be moved through the slit to position the attachment means in the free space below the storage surface, and the through hole allowing the attachment means to be moved vertically upward through the storage surface to engage the ballast weight.

The rack may correspond to any of the configurations described above, wherein the support means of the rack support the storage surface above the floor of the nacelle. Hence, in this case, the floor is provided by the nacelle and the support means is configured to provide the free space between the floor of the nacelle and the storage surface of the rack.

All features, advantages and aspects which have been explained with respect to the ballast weight according to the invention and the rack of the crane system according to the invention can be applied to the nacelle according to the invention and vice versa.

The nacelle can be attached to a tower of a wind turbine in particular an offshore wind turbine, further in particular a floating offshore wind turbine. The wind turbine can be in an operational state or in an intermediate state achieved during the construction of the wind turbine. Alternatively, the nacelle can be in a state in which it is not yet attached to a tower of a wind turbine. Hence, the nacelle can, e.g., be stored or transported in an aircraft, on a road vehicle or in or on a ship.

The invention also concerns a method for operating a wind turbine, in particular an offshore wind turbine, further in particular a floating offshore wind turbine, and/or for feeding electrical and/or chemical energy to an electricity and/or chemical grid, the method comprising the following steps:
constructing and/or servicing a wind turbine, wherein at least one component that is installed in the wind turbine is lifted by a crane, while a ballast weight according to the invention is attached to an attachment means of the crane that is attached to the lower end of a rope of the crane and/or by using a crane system according to the invention, and/or by executing the steps of the method for operating a crane system according to the invention,
generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
supplying, at least partially, the electrical power, the electrical energy, and/or the chemical energy to an electrical and/or chemical utility grid, in particular to an onshore electrical and/or chemical utility grid and/or chemical or electrical storage.

The term "chemical energy" includes means for storing energy in a chemical substance such as in hydrogen. A chemical energy grid could for example be a gas (hydrogen) grid and/or storage device.

All features, advantages and aspects which have been explained with respect to the ballast weight according to the invention and/or the crane system according to the invention and/or the method for operating a crane system according to the invention can be applied to the method for operating a wind turbine according to the invention and vice versa. The method for operating a wind turbine can in particular be executed by a wind turbine comprising a nacelle according to the invention.

It has to be understood, that a ballast weight according to the invention and/or the crane system according to the invention and/or the nacelle according to the invention can be provided in a wind turbine, in particular an offshore wind turbine, further in particular a floating offshore wind turbine. Additionally, the method for operating a crane system according to the invention and/or the method for operating a wind turbine according to the invention can be executed with such wind turbine. The method for operating a crane system according to the invention can especially be used to lift objects, in particular wind turbine components, during the construction and/or servicing of a wind turbine.

It is also to be understood, that the features mentioned above, for example the rack described in conjunction with the crane system and nacelle as well as the locking device described in conjunction with the ballast weight and the crane system, and those yet to be explained below can be used not only in the respective combinations indicated, but also in other combinations or in isolation, without leaving the scope of the present invention. In particular, the features of the different aspects, embodiments, and/or methods of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
- Fig. 1: shows a schematic representation of an embodiment of a wind turbine comprising a nacelle according to the present invention with a crane system according to the present invention and a ballast weight according to the present invention being used to perform an embodiment of the method for operating a crane system according to the present invention and an embodiment of the method for operating a wind turbine according to the present invention,
- Fig. 2: schematically shows an embodiment of the ballast weight used in fig. 1,
- Fig 3: schematically shows a partially disassembled state of the ballast weight shown in fig. 2,
- Fig. 4: schematically shows an intermediate step of the method for operating a crane system according to fig. 6,
- Fig. 5: schematically shows another intermediate step (operational state) of the method for operating a crane system according to fig. 6,
- Fig. 6: shows a flow chart of an exemplary embodiment of the method for operating a crane system according to the present invention, and
- Fig. 7: shows a flow chart of an exemplary embodiment of the method for operating a wind turbine according to the present invention.

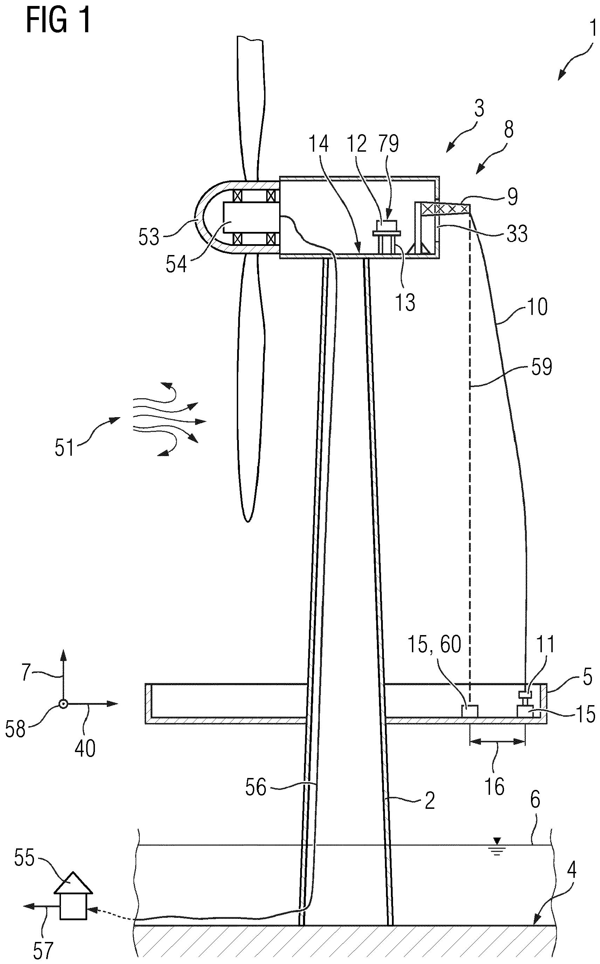

Fig. 1 shows a schematic representation of a wind turbine 1 comprising respective embodiments of a nacelle 3, a crane system 8 and a ballast weight 12. The wind turbine 1 comprises a tower 2. The nacelle 3 is attached to the tower 2 in the example, but could in other embodiments, e.g., be transported on a ship. The wind turbine 1 is an offshore wind turbine, wherein the tower 2 is fixed to a sea floor 4 and a platform 5 of the wind turbine 1 is arranged above a sea level 6 in the vertical direction 7. In describing the invention, a global coordinate system is used that is spanned by the vertical direction 7 and two horizontal directions 40, 58.

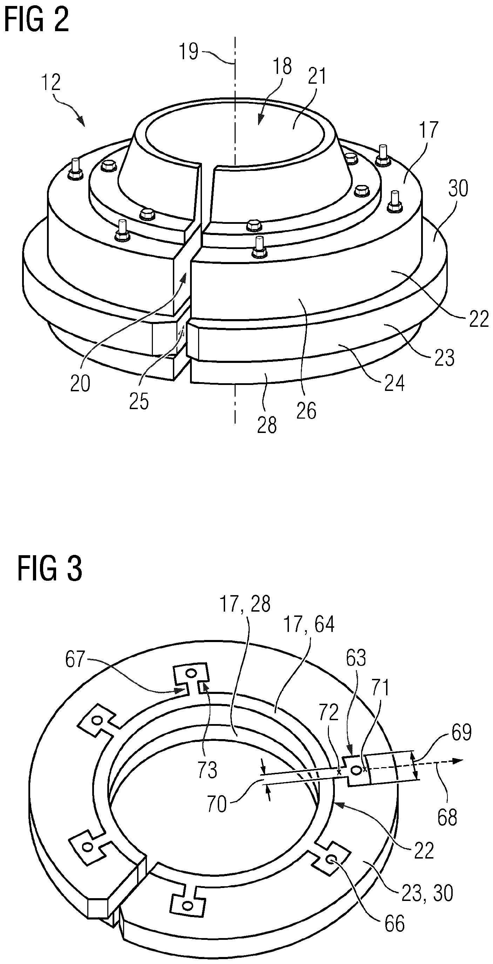

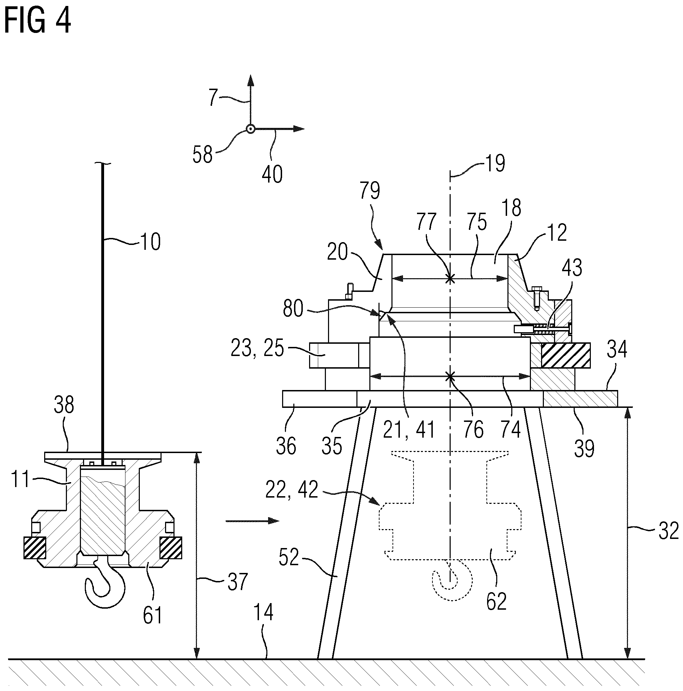

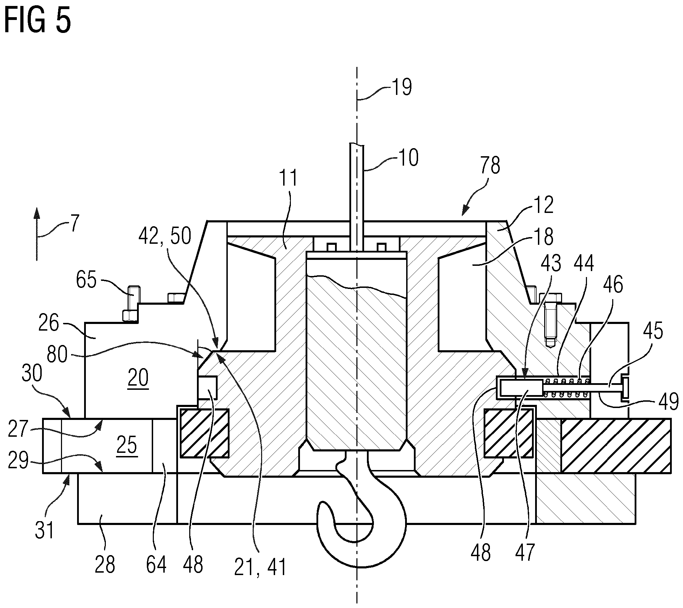

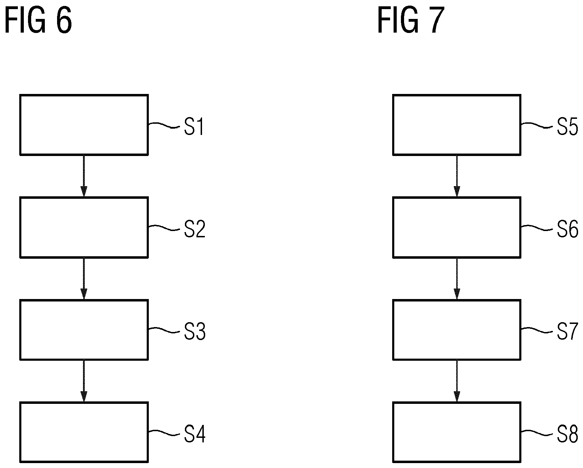

The nacelle 3 comprises the crane system 8. The crane system 8 will be described in more detail later with reference to fig. 4 and 5. The crane system 8 comprises a crane 9 with a rope 10 and an attachment means 11 which is fixed to the lower end of the rope 10 and configured to be attached to an object 15 to be lifted. The crane system 8 additionally comprises a ballast weight 12, which is shown in a stored state 79 on a rack 13 in fig. 1. The rack 13 is mounted to a floor 14 of the nacelle 3. The ballast weight 12 is described in more detail later with reference to fig. 2 to 5. The ballast weight can be coupled to the attachment means 11 to increase the load lifted by the crane 9. The coupling can be realized by executing the steps of a method for operating the crane system, that will later be discussed in detail with reference to fig. 6.

Wind turbines are typically used and therefore also constructed and serviced in an environment with rough wind conditions. In fig. 1, a wind direction is indicated by the arrows 51. The crane 9 can be used to lift or lower the object 15, e.g., to service the wind turbine 1 and/or during the construction of the wind turbine 1. When the object 15 is attached to the attachment means 11 and lifted by means of the crane 9, the lower end of the rope 10 can be deflected quite heavily due to the wind conditions. Therefore, the rope 10 does not extend vertically when lifting or lowering the object 15, as preferred and indicated by the dashed line 10a, but is deflected by a distance 16 from its intended position 60 that would be reached in an ideal state with no wind. Such a deflection 16 can make it difficult to operate the crane system 8. In an environment with strong wind, the deflection 16 may be even bigger than shown in fig. 1, such that the object 15, when lifted by means of the crane 9, is out of reach for personal on the platform 5 or, e.g., not be put down on the platform 5.

To reduce the deflection 16 of the rope 10 caused by the wind, the ballast weight 12 can be coupled to the attachment means 11 to increase the total weight lifted by the crane 9. This causes an increased tension in the rope 10 during the lifting process, such that the deflection 16 of the rope 10 can be reduced. Since wind turbines are usually positioned in areas with strong winds, the use of such an additional ballast weight is especially beneficial in the context of offshore wind turbines 1, e.g., when lifting relatively light spare parts to the nacelle.

Fig. 2 shows an embodiment of the ballast weight 12. The ballast weight 12 comprises a main body 17 which encompasses a receiving space 18 for housing the attachment means 11 in an operating state, in which the ballast weight 12 is coupled to the attachment means 11. The ballast weight 12 has a central axis 19, which extends through the receiving space 18. In the example, the ballast weight 12 is approximately symmetrical with respect to the central axis 19. In this case, the central axis 19 can be referred to as symmetry axis. In the example, the central axis 19 extends through the center of gravity of the ballast weight 12.

The main body 17 of the ballast weight 12 further comprises a slit 20, which connects an inner surface 21 of the main body 17 with an outer surface 22 of the main body 17. The slit 20 allows the rope 10 to be moved into the receiving space 18, while the rope 10 extends above and below the ballast weight 12, as schematically shown in fig. 4.

The ballast weight 12 further comprises a bumper 23 which is configured to reduce or absorb an impact of the ballast weight 12 in the case of the ballast weight 12 colliding with an object, e.g., with the tower 2. The bumper 23 extends along the circumference of the main body 17, such that it provides an outer surface 24 of the ballast weight 12 which is further distanced from the central axis 19 then the outer surface 22 of the main body 17. The bumper 23 also provides a slit 25, which extends the slit 20 of the main body 17 and which comprises a chamfer causing the slit 20, 25 to be funnel-shaped, such that its size increases towards the outer surface 24. This way, the rope 10 can more easily be inserted into the slit 20, 25.

The fixation of the bumper 23 to the main body 17 is shown in fig. 3. The bumper 23 is attached to the main body 17 by a form fit. This is achieved by the main body 17 comprising a plurality of holding projections 63 for holding the bumper 23. In the example the holding projections are formed by a bumper holder 64, that forms a middle part of the main body 17, that is held between a first and second body part 26, 28 of the main body 17.

The holding projections 63 project from the outer surface 22 of the main body 17, namely the bumper holder 64, and extend along a respective projection direction 68 away from the central axis 19. The size 69, 70 of each holding protection 63 in a direction orthogonal to the respective projection direction 68 is larger at an outer position 71 along the projection direction 68 then at an inner position 72, which is closer to the central axis 19. Hence, each holding projection provides a respective holding surface 73 that faces towards the outer surface 22 of the main body 17. The bumper 23 provides holding sections 67, which abut the holding surfaces 73 of each holding protection 63. In other words, the holding sections 67 of the bumper 23 "wrap around" each holding protection 63 to form a form-fit.

To restrict to the movement of the bumper 23 relative to the main body 17 in the direction along the central axis 19, the main body 17 provides a first body part 26 with a first bumper stop 27 and a second body part 28 with a second bumper stop 29, as shown in fig. 5. A bumper holder 64 forming the holding protection 63 is arranged between the first and second body part 26, 27, providing the holding projections 63 as described above. All three body parts are bolted together along the central axis 19 to form the main body 17 in a connected state, shown in fig. 2, by bolts 65 extending through the through holes 66 in the holding projections 63. In this state, the first bumper stop 27 abuts an upper bumper surface 30 of the bumper 23 and to the second bumper stop 29 abuts a lower bumper surface 31 of the bumper 23, wherein the two bumper stops 27, 29 are arranged on opposing sides of the bumper 23 along the central axis 19. Hence, the bumper 23 is fixed to the main body 17 by means of a form-fit in the direction along the central axis 19.

In the example, the elongation of the ballast weight 12 orthogonal to the central axis 19 is about four times the elongation of the ballast weight 12 along the central axis 19. Hence, the ballast weight 12 can be referred to as particularly flat regarding its elongation along the central axis 19. This is beneficial, since a lifting height of the crane 9, which refers to the maximum height which the object 15 can be lifted by means of the crane 9, is reduced by the elongation of the ballast weight 12 along the central axis 19. In the example, the ballast weight 12 has an elongation orthogonal to the central axis 19 of 0.6 m and a mass of 200 kg.

The ballast weight 12 can be coupled to the attachment means 11 without the use of additional fixing means and tools. Hence the coupling process is very easy and may be carried out by a single person operating the crane without the need of special tools. The process of coupling the ballast weight 12 to the attachment means 11 is now described with additional reference to the flowchart in fig. 6.

In step S1, the ballast weight 12 is positioned in a first height 32 above the floor 14 of the nacelle 3, as shown in fig. 4. In the described embodiment, this is achieved by storing the ballast weight 12 on a rack 13. The storage surface 34 for storing the ballast weight 12 in its stored state is supported by support means 52 in the first height 32 above the floor 14 of the nacelle 3. The support means 52 can, e.g., be mounted to the floor 14.

The storage surface 34 of the rack 13, comprises a through hole 35 and a slit 36. The slit 36 connects the through hole 35 to an outer edge of the storage surface 34 to allow the rope 10 to be moved through the slit 36 into the through hole 35. The ballast weight 12 is arranged in such a way, that the receiving space 18 of the ballast weight 12 is aligned with the through hole 35 and that the slit 20 of the ballast weight 12 is aligned with the slit 36 of the rack 13.

In step S2, the crane 9 is operated to positioned the attachment means 11 at a second height 37 closer to the floor 14 than the first height 32 and to position the rope 10 besides the ballast weight 12. This state is also shown in fig. 4. The rope 10 is preferably placed in a plane that comprises the central axis 19 and the slit 20, namely the image plane in fig. 4. At the end of step S2, the attachment means 11 is positioned in a position 61 in which an uppermost surface 38 of the attachment means 11 is arranged lower than a lower surface 39 of the rack 13.

In step S3, the crane 9 is operated to move the rope 10 through the slit 20 of the ballast weight 12 and the slit 36 of the rack 13 into the receiving space 18 and the through hole 35, such that the attachment means 11 is aligned with the receiving space 18 of the ballast weight 12 and with the through hole 35 of the rack 13. In the example shown in fig. 4, the slit 20 of the main body and the rope 10 are both located within the image plane. In this case the rope can therefore be moved into the receiving space 18 simply by moving the attachment means in the horizontal direction 40 and therefore to the right in fig. 4.

The position 62 of the attachment means 11 achieved at the end of step S3 is shown in fig. 4 by a dashed outline. The rope 10 is aligned with the central axis 19 of the ballast weight 12 at the end of step S3. To the movement of the attachment means 11 performed during step S3, the rack 13 provides an open space between its lower surface 39 and the floor 14. The extension of the open space in the vertical direction 7 is larger than a maximum elongation of the attachment means 11 in that direction, such that the attachment means 11 can be positioned between the ballast weight 12 and the floor 14 without contacting the lower surface 39 or the floor 14. The rack 13 also provides enough clearance orthogonal to the vertical direction 7 to allow a collision-free movement of the attachment means 11 from the position 61 to the position 62.

In step S4, the crane 9 is operated to lift the attachment means 11 in vertical direction 7, such that the attachment means 11 slides into the receiving space 18 and a contact surface 41 of the ballast weight 12 comes to rest upon a support surface 42 of the attachment means 11. The state achieved at the end of step S4 can be referred to as operational state 78 and is shown in fig. 5 as a section view of the coupled ballast weight 12 and attachment means 11.

The contact surface 41 is a part of the inner surface 21 of the main body 17 and at its inner part is arranged orthogonal to the central axis 19 in the example. In the example, the outer section of the contact surface is arranged at an angle 80 of approximately 45° to the central axis 19. This can be advantageous to center the attachment means 12 while inserting it into the receiving space18, therefore moving the rope 10 towards the central axis 19 and aligning the center of gravity of the ballast weight 12 with the rope 10.

The contact surface 41 is formed, since the size 74, 75 of the receiving space 18 in the horizontal directions 40, 58 is larger at a first position 76 along the central axis 19 than at a second position 77 along the central axis 19 that is arranged above the first position 76 when the ballast weight 12 is arranged in the operational state 78.

The support surface 42 of the attachment means 11 is a part of an outer surface of the attachment means 11. Once the operational state 78 is reached, the support surface 42 of the attachment means 11 abuts the contact surface 41 of the ballast weight 12, such that the ballast weight 12 and the attachment means 11 form a form-fit along the central axis 19 due to which the ballast weight 12 rests on the attachment means 11 in the vertical direction 7.

In the example, the attachment means 11 and the ballast weight 12 additionally form a form-fit orthogonal to the central axis 19 in the operating state. The outer surface 50 of the attachment means 11 abuts the inner surface 21 of the main body 17 not only at the contact surface 41, but also in an area orthogonal to the contact surface 41. This helps to fixate the attachment means 11 in the receiving space 18.

In fig. 5, the ballast weight 12 may still be moved relative to the attachment means 11 in the upwards direction along the central axis 19. To restrict this movement, a locking device 43 is provided, which is configured to automatically lock the ballast weight 12 to the attachment means 11 when the attachment means 11 is slid into the receiving space 18 along the central axis 19. The locking device 43 is arranged in a bore 44 of the main body 17, which extends orthogonal to the central axis 19 from the receiving space 18 to the outer surface 22. In the bore 44 a shaft 45 and a spring 46 is provided. The spring 46 applies a locking force to the shaft 45, which automatically pushes the shaft 45 into a locked position, that is shown in fig. 5, in which a tip 47 of the shaft 45 protrudes into the receiving space 18. In the locked position, the tip 47 of the shaft 45 engages with a groove 48 of the attachment means 11 to provide a stop for the attachment means 11, such that the movement of the ballast weight 12 relative to the attachment means 11 along the central axis 19 is restricted.

To uncouple the ballast weight 12 from the attachment means 11, the shaft 45 may be pulled into an unlocked position, in which it does not protrude into the receiving space 18, by applying a counterforce to the shaft 45, which is bigger than the locking force and directed contrary to the locking force. The locking device 43 is accessible from the outside of the ballast weight 12, such that a person can take hold of an outer portion 49 of the shaft 45 and pull the shaft 45 against the locking force out of the receiving space 18. The attachment means 11 may then be lowered by the crane 9, such that it slides out of the receiving space 18.

Fig. 6 shows a flow chart of an embodiment of a method for operating the wind turbine 1. In step S4 the wind turbine 1 is serviced. To do so, the crane system 8 is used to lift objects 15 by means of the crane 9 from the platform 5 up to the nacelle 3. The objects 15 are therefore attached to the attachment means 11 on the lower end of the rope 10 of the crane 9. To minimize the deflection 16 of the rope 10 caused by the wind, the ballast weight 12 is coupled to the attachment means 11 according to the method described in fig. 6 to lift light objects 15. However, to lift heavy objects 15 by means of the crane 9, the ballast weight 12 is not coupled to the attachment means 11.

Hence, in this case, heavier objects 15 can be lifted without overloading the crane 9.

Alternatively, in case of the wind turbine 1 not being constructed yet, step S5 could alternatively refer to the wind turbine 1 being constructed using the crane system 8 with the ballast weight 12 to lift objects 15. The ballast weight 12 could then again be coupled to the attachment means 11 of the crane 9 by executing the method of fig. 6.

In step S6, electrical power is generated by a generator of the wind turbine 1 due to the rotation of a rotor 53 with respect to the stator 54. At least one previously lifted object 15 can be used in this process. The object 15 can e.g. be a component of the generator and/or switching gear and/or a bearing.

In step S7 at least a part of the electrical power is transmitted to an energy receiving arrangement 55, in particular via the main cable 56. The energy receiving arrangement 55 is, in the example, not positioned in international waters and is in particular positioned onshore and/or within a 12-miles-zone of a respective sovereign national state over which the respective state has jurisdiction.

In step S8 at least a part of the electrical power is supplied to an electrical utility grid 57, in particular to an onshore electrical utility grid 57.

It hast to be noted, that during the construction of the wind turbine 1 shown in fig. 1 the rack 13 for storing the ballast weight 12 is already installed in the nacelle 3. Hence, the nacelle 3 with the pre-installed rack 13 can be transported to the final location of the wind turbine 1 by means of a road vehicle or an aircraft or a ship. This improves the construction process of the wind turbine 1, since less construction steps must be carried out at the final location and in particular in difficult environmental conditions. The crane 9 may also be pre-installed in the nacelle 3. According to fig. 1, the nacelle 3 additionally comprises a door 33 which can be opened to provide an opening in the nacelle 3 which the crane 9 can extent through.

It further has to be noted, that the geometry of the attachment means 11 can differ quite strongly from the one shown in the exemplary embodiments. In the described embodiments, the attachment means 11 does not only provide a hook, but also an initial weight with an outer bumper. In other embodiments, the attachment means 11 may not provide a hook and/or a bumper, but can, e.g., be or comprise a magnet or any other means configured to hold the object 15. Preferably, the receiving space 18 of the ballast weight 12 is adapted to the geometry of the respective attachment means 11 provided in the respective crane system 8.

Moreover, the central axis 19 of the ballast weight 12 may not always be exactly vertical as shown in the figures. For example, when the ballast weight 12 is stored on the rack 13 inside of the nacelle 3 of the wind turbine 1, the rack 13 may be tilted, such that its storage surface 34 is not horizontal. In this case, when the attachment means 11 is positioned at the position 62 shown in fig. 4, the rope 10 may extend at an angle of less than 5° or less than 10° or less than 20° to the central axis 19.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein. It has to be noted that embodiments of the invention have been described with reference to different subject matters. In particular, some embodiments have been described with reference to apparatus type claims, such as the presence of a locking device, whereas other embodiments have been described with reference to method type claims, such as the relative positioning of the ballast weight and the attachment means while attaching the ballast weight. However, a person skilled in the art will gather from the above description that, unless otherwise notified, in addition to any combination of features belonging to one type of subject matter, also any combination between features relating to different subject matters, in particular between features of the apparatus type claims and features of the method type claims, such as a combination of a vertical movement of the attachment means during the connection and an automatic locking of the locking device is considered as to be disclosed with this application.

## Claims

1. Ballast weight (12) for coupling to an attachment means (11), in particular to a hook, attached to the lower end of a rope (10) of a crane (9), in particular of a crane (9) of a wind turbine (1),
wherein the ballast weight (12) is formed by or comprises a main body (17),
wherein the main body (17) encompasses a receiving space (18), wherein the receiving space (18) is designed to receive at least a section of the attachment means (11) in an operational state (78) of the ballast weight (12), in which the ballast weight (12) is coupled to the attachment means (11) and used as a ballast to reduce a deflection (16) of the rope (10) due to wind conditions,
wherein the receiving space (18) is delimited by an inner surface (21) of the main body (17) and extends along a central axis (19) of the ballast weight (12),
wherein the size (74, 75) of the receiving space (18) in at least one direction orthogonal to the central axis (19) is larger at a first position (76) along the central axis (19) than at a second position (77) along the central axis (19) that is arranged above the first position (76) when the ballast weight (12) is arranged in the operational state (78), such that the inner surface (21) forms a contact surface (41) arranged at an angle (80) to the central axis (19), that is designed to be supported by a support surface (42) of the attachment means (11) in the operational state (78),
wherein the main body (17) comprises a slit (20) that connects the inner surface (21) of the main body (17) with an outer surface (22) of the main body (17), to allow for a movement of the rope (10) into the receiving space (18) during the attachment of the ballast weight (12) to the attachment means (11).

2. Ballast weight (12) according to claim 1,
wherein the slit (10) extends in parallel to the central axis (19) or at an angle of less than 5 ° or less than 10 ° or less than 20 ° to the central axis (19), and/or
wherein the slit (10) is funnel-shaped, such that a width of the slit (10) increases towards the outer surface (22) of the main body (17).

3. Ballast weight (12) according to claim 1 or 2, wherein the ballast weight (12) comprises a bumper (23) which is fixed to the main body (17) and extends at least partially around the central axis (19) along the circumference of the ballast weight (12).

4. Ballast weight (12) according to claim 3, wherein the main body (12) comprises multiple holding projections (63) for holding the bumper (23) and the bumper (23) comprises holding sections (67) that form counterparts to the holding projections (63),
wherein each holding projection (63) projects from the outer surface (22) of the main body (17) and extends along a respective projection direction (68) away from the central axis (19),
wherein the size (69, 70) of each holding projection (63) in at least one respective direction orthogonal to the respective projection direction (68) is larger at an outer position (71) along the projection direction (68) than at an inner position (72) along the projection direction (68), such that each holding projection provides (63) a respective holding surface (73) that faces towards the outer surface (22) of the main body (17),
wherein the holding sections (67) of the bumper (23) abut the holding surfaces of the (73) holding projections (63) forming a form-fit and restricting a movement of the bumper (23) relative to the main body (17).

5. Ballast weight (12) according to claim 3 or 4,
wherein the main body (17) comprises at least a first body part (26) with a first bumper stop (27) and a second body part (28) with a second bumper stop (29),
wherein the first body part (26) and the second body part (28) are connected, in particular along the central axis (19), to form the main body (17) in a connected state,
wherein the first bumper stop (27) abuts an upper bumper surface (30) of the bumper (23) and the second bumper (29) stop abuts a lower bumper surface (31) of the bumper (23), wherein the first and second bumper stops (26, 28) are arranged on opposite sides of the bumper (23) along the central axis (19), such that the bumper (23) is fixed to the main body (17) by means of a form-fit along the central axis (19).

6. Ballast weight (12) according to one of the preceding claims,
wherein the ballast weight (12) comprises at least one locking device (43) configured to automatically lock the ballast weight (12) to the attachment means (11) during the coupling of the ballast weight (12) to the attachment means (11), in particular when the attachment means (11) is at least partly slid into the receiving space (18) along the central axis (19).

7. Ballast weight (12) according to claim 6, wherein the locking device (43) comprises a shaft (45) and a spring (46), wherein the shaft (45) is positioned in a bore (44) of the main body (17), wherein the shaft (45) is movable along a shaft direction between a locked position in which at least a tip (47) of the shaft (45) protrudes into the receiving space (18), and an unlocked position in which the shaft (45) does not protrude into the receiving space (18) or protrudes into the receiving space (18) for a lesser distance than in the locked position, wherein the spring (46) is arranged between the main body (17) and the shaft (45) to apply a locking force to the shaft (45), pushing the shaft (45) towards the locked state.

8. Ballast weight (12) according to one of the preceding claims,
wherein a height-to-width-ratio of the ballast weight (12), with the height being a maximum elongation of the ballast weight (12) in the direction of the central axis (19) and the width being a maximum elongation of the ballast weight (12) orthogonal to the central axis (19), is within a range of 1/1 to 1/5 and/or wherein the ballast weight (12) has a maximum height of 0.3 m or of 1.5 m and/or wherein the ballast weight (12) has a mass of at least 100 kg or at least 300 kg.

9. Crane system (8), in particular designed for integration into a wind turbine (1), comprising a crane (9) with a rope (10) and an attachment means (11) attached to the lower end of the rope (10), and a ballast weight (12) according to one of the preceding claims.

10. Crane system (8) according to claim 9,
wherein the relative movement between the ballast weight (12) and the attachment means (11) in the direction of the central axis (19) of the ballast weight (12) and/or in a plane orthogonal to the central axis (19) is limited by a form-fit between the inner surface (21) of the main body (12) and an outer surface (50) of the attachment means (11) in the operational state (78) of the ballast weight (12),
wherein the outer surface (50) of the attachment means (11) or a section of this outer surface (50) forms the support surface (42).

11. Crane system (8) according to claim 9 or 10,
wherein the ballast weight (12) comprises a locking device (43) and the attachment means (11) comprises a groove (48) or an opening,
wherein the locking device (43) is configured to automatically engage into the groove (48) or the opening during the coupling of the ballast weight (12) and the attachment means (11).

12. Crane system (8) according to one of the claims 9 to 11,
wherein the crane system (8) comprises a rack (13) for storing the ballast weight (12),
wherein the ballast weight (12) rests on the storage surface (34) of the rack (13) when the ballast weight (12) is in a stored state (79),
wherein the storage surface (34) comprises a though hole (35) and a slit (36) connecting the through hole (35) to an edge of the storage surface (34),
wherein the slit (36) allows the rope (10) to be inserted into the through hole (35) while the rope (10) extends orthogonally to the storage surface (34),
wherein the size of the through hole (35) exceeds the size of the attachment means (11), such that the attachment means (11) can be moved through the through hole (35) in the vertical direction (7),
wherein the rack (13) comprises support means (52) for supporting the storage surface (34) above a floor (14), such that the distance between the storage surface (34) and the floor (14) is larger than the extension of the attachment means (11) in the vertical direction (7), when the attachment means (11) is hanging from the rope (10).

13. Method for operating a crane system (8) according to one of the claims 9 to 12, comprising the steps of
positioning the ballast weight (12) at a first height (32) above a floor (14),
operating the crane (9) to position the attachment means (11) in a second height (37) closer to the floor (14) than the first height (32) and to position the rope (10) besides the ballast weight (12),
operating the crane (9) to move the rope (10) through the slit (20) of the ballast weight (12) into the receiving space (18), such that the attachment means (11) is aligned with the receiving space (18) of the ballast weight (12), and
operating the crane (9) to lift the attachment means (11) in the vertical direction (7), such that the attachment means (11) slides into the receiving space (18) and the contact surface (41) of the ballast weight (12) comes to rest upon the support surface (42) of the attachment means (11).

14. Nacelle (3) for a wind turbine (1) comprising a rack (13) for storing a ballast weight (12) for loading an attachment means (11), in particular a hook, attached to the lower end of a rope (10) of a crane (9), in particular for storing a ballast weight (12) according to one of the claims 1 to 8,
wherein the rack (13) comprises a storage surface (34) designed to support the ballast weight (12) when the ballast weight (12) is in a stored state (79),
wherein the rack (13) comprises support means (52) that supports the storage surface (34) above a floor (14) of the nacelle (3), thereby creating a free space below the storage surface (34),
wherein the storage surface (34) comprises a though hole (35) and a slit (36) connecting the through hole (35) to an edge of the storage surface (34),
the slit (36) allowing the rope (10) to be moved through the slit (36) to position the attachment means (11) in the free space below the storage surface (34), and
the through hole (35) allowing the attachment means (11) to be moved vertically upward through the storage surface (34) to engage the ballast weight (12).

15. A method for operating a wind turbine (1), in particular an offshore wind turbine (1), further in particular a floating offshore wind turbine (1), and/or for feeding electrical and/or chemical energy to an electricity and/or chemical grid, the method comprising the steps of
constructing and/or servicing a wind turbine (1), wherein at least one component that is installed in the wind turbine (1) is lifted by a crane (9), while a ballast weight (12) according to one of the claims 1 to 8 is attached to an attachment means (11) of the crane (9) that is attached to the lower end of a rope (10) of the crane (9) and/or by using a crane system (8) according to one of the claims 9 to 12, and/or by executing the steps of the method for operating a crane system (8) according to claim 13, generating, by the wind turbine (1), electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
supplying, at least partially, the electrical power, the electrical energy, and/or the chemical energy to an electrical and/or chemical utility grid, in particular to an onshore electrical and/or chemical utility grid and/or chemical or electrical storage.
